# EUROPÄISCHE PATENTSCHRIFT

(11) **EP 2 664 886 B1**
(45) Veröffentlichungstag und Bekanntmachung des Hinweises auf die Patenterteilung: **11.08.2021**
(21) Anmeldenummer: 13167774.2
(22) Anmeldetag: 15.05.2013
(51) Int. Cl.: F28D 7/00, F28D 7/16, F28D 21/00, F28F 13/14, F28F 1/40, F01N 5/02, F01N 13/18, F25B 21/02

(54) **Wärmetauscher**
Heat exchanger
Echangeur thermique

(30) Priorität: 18.05.2012 DE 102012208354
(43) Veröffentlichungstag der Anmeldung: 20.11.2013
(73) Patentinhaber: Eberspächer Exhaust Technology GmbH & Co. KG, 66539 Neunkirchen (DE)
(72) Erfinder: Resch, Andreas, 73732 Esslingen (DE)
(74) Vertreter: BRP Renaud & Partner mbB Rechtsanwälte Patentanwälte Steuerberater

(56) Entgegenhaltungen:
- EP-A2- 2 378 578
- EP-A2- 2 383 533
- DE-A1-102009 037 179
- DE-A1-102010 001 417
- DE-B4-102007 063 172
- None

## Beschreibung

Die vorliegende Erfindung betrifft einen Wärmetauscher, insbesondere für eine Abgasanlage einer Brennkraftmaschine, vorzugsweise in einem Kraftfahrzeug. Die vorliegende Erfindung betrifft außerdem eine Brennkraftmaschine, insbesondere in einem Kraftfahrzeug, die mit wenigstens einem solchen Wärmetauscher ausgestattet ist.

Um den energetischen Wirkungsgrad von Brennkraftmaschinen, insbesondere bei Fahrzeuganwendungen, zu verbessern, ist es möglich, Wärmeenergie die im Abgas der Brennkraftmaschine enthalten ist, zu nutzen. Hierzu können Wärmetauscher zur Anwendung kommen, um die Wärme aus dem Abgas, das dann als Heizmittel dient, in ein Kühlmittel zu übertragen, bspw. um damit einen Fahrgastinnenraum zu beheizen oder um das Kühlmittel, das dann als Arbeitsmittel dient, innerhalb eines Rankine-Kreisprozesses zu verdampfen. Desweiteren kann mit Hilfe thermoelektrischer Generatoren die im Abgas enthaltene Wärme in elektrische Energie gewandelt werden. Hierzu kommen Wärmetauscher der eingangs genannten Art zum Einsatz, die zumindest einen thermoelektrischen Generator umfassen, der eine Heißseite und eine Kaltseite besitzt. Desweiteren umfasst ein derartiger Wärmetauscher zumindest ein Heizrohr zum Führen eines Heizmittels, das an wenigstens einer Heißseite eines solchen thermoelektrischen Generators angeordnet ist, sowie mindestens ein Kühlrohr zum Führen eines Kühlmittels, das an wenigstens einer Kaltseite eines solchen thermoelektrischen Generators angeordnet ist. Zweckmäßig kann dabei vorgesehen sein, dass innerhalb des Wärmetauschers der wenigstens eine thermoelektrische Generator, das wenigstens eine Heizrohr und das wenigstens eine Kühlrohr in einer Stapelrichtung aufeinader gestapelt sind und so einen Rohrstapel bilden, in dem sich der jeweilige thermoelektrische Generator, das jeweilige Heizrohr und das jeweilige Kühlrohr parallel zueinander in einer Längsrichtung des Rohrstapels erstrecken.

Die vorliegende Erfindung beschäftigt sich mit dem Problem, für einen derartigen Wärmetauscher, der zumindest einen thermoelektrischen Generator enthält, eine verbesserte oder zumindest eine andere Ausführungsform anzugeben, die sich insbesondere durch einen erhöhten energetischen Wirkungsgrad auszeichnet.

Erfindungsgemäß wird dieses Problem insbesondere durch den Gegenstand des unabhängigen Anspruchs gelöst. Vorteilhafte Ausführungsformen sind Gegenstand der abhängigen Ansprüche.

Aus der DE 10 2009 037 179 A1 ist es grundsätzlich bekannt, den Wärmestrom vom jeweiligen Heizrohr zum jeweiligen Kaltrohr durch den jeweiligen thermoelektrischen Generator hindurch in der Längsrichtung des Rohrstapels möglichst konstant zu gestalten, obwohl in der Längsrichtung des Rohrstapels die Temperaturdifferenz zwischen dem jeweiligen Heizrohr und dem jeweiligen Kaltrohr aufgrund des Wärmestroms in der Längsrichtung des Rohrstapels variiert. Beispielsweise nimmt bei einer Verschaltung der Heizrohre und der Kühlrohre nach dem Gleichstromprinzip die Temperaturdifferenz in der Längsrichtung des Rohrstapels deutlich ab. Auch bei einer Verschaltung nach dem Gegenstromprinzip kann in der Regel eine Abnahme der Temperaturdifferenz in der Längsrichtung des Rohrstapels beobachtet werden, die jedoch geringer ausfallen kann als bei einer Durchströmung nach dem Gleichstromprinzip. Die DE 10 2009 037 179 A1 nutzt nun diese Erkenntnis und berücksichtigt die in der Längsrichtung des Rohrstapels abnehmende Temperaturdifferenz, indem korrespondierend dazu in der Längsrichtung des Rohrstapels eine Zunahme der Wärmeübertragungsfähigkeit bzw. eine Abnahme des Wärmeübertragungswiderstandes geschaffen wird. Im Idealfall sind für den jeweiligen vorbestimmten Betriebszustand des Wärmetauschers bzw. der damit ausgestatteten Brennkraftmaschine die sich in der Längsrichtung des Rohrstapels einstellende Änderung der Temperaturdifferenz und die konstruktiv in den Wärmetauscher gezielt eingearbeitete Veränderung der Wärmeübertragungsfähigkeit in dieser Rohrstapellängsrichtung so aufeinander abgestimmt, dass entlang der Längsrichtung des Rohrstapels der Wärmestrom weitgehend konstant bleibt. Bei abnehmender Temperaturdifferenz muss die Wärmeübertragungsfähigkeit erhöht werden, da die Temperaturdifferenz das Potential bzw. den Antrieb des Wärmestroms repräsentiert.

Um Wandbereiche mit unterschiedlicher Wärmeübertragungsfähigkeit zu erhalten, werden gemäß der DE 10 2009 037 179 A1 an den Wandbereichen rippenartige Lamellen in unterschiedlicher Anzahl bzw. Dichte angeordnet. Dies ist mit einem hohen Herstellungsaufwand verbunden. Dieser Aufwand soll mit der Erfindung wesentlich vermindert werden.

Aus der DE 10 2010 001 417 A1 ist ein Wärmetauscher gemäß dem Oberbegriff des Anspruchs 1 bekannt.

Erfindungsgemäß ist die Wärmeübertragungsstruktur als Rippenstruktur in Form einer gewellten bzw. wellblechartigen oder plissierten Wand ausgebildet, wobei die Wellen eine geringe Wellenlänge bei relativ großer Wellenamplitude aufweisen können. Die Variation der Wärmeübertragungsfähigkeit kann durch Veränderung der Wellenform, insbesondere durch Veränderung der Wellenlänge und/oder Wellenamplitude, aber auch durch Veränderung der Wandstärke erfolgen.

Um den vorstehend skizzierten allgemeinen Grundgedanken der vorliegenden Erfindung im Wärmetauscher umzusetzen, kann gemäß einer vorteilhaften Lösung vorgesehen sein, in wenigstens einem der Rohre eine Wärmeübertragungsstruktur anzuordnen, die eine Wärmeübertragungsfähigkeit aufweist, die einen Wärmeübergang zwischen dem jeweiligen Rohr und dem jeweiligen darin geführten Mittel begünstigt. Darüber hinaus wird vorgeschlagen, zumindest eine solche Wärmeübertragungsstruktur so auszugestalten, dass ihre Wärmeübertragungsfähigkeit in der Längsrichtung des Rohrstapels variiert. Mit anderen Worten, die Wärmeübertragungsfähigkeit, die neben der Temperaturdifferenz für den Wärmestrom verantwortlich ist, wird mit Hilfe einer Wärmeübertragungsstruktur gezielt beeinflusst, um so den gewünschten Verlauf der Wärmeübertragungsfähigkeit entlang der Rohrstapellängsrichtung realisieren zu können. Derartige Wärmeübertragungsstrukturen können entweder nur in den Heizrohren oder nur in den Kühlrohren oder aber sowohl in den Heizrohren als auch in den Kühlrohren angeordnet sein. Durch die Beeinflussung der Wärmeübertragungsfähigkeit mit Hilfe derartiger Wärmeübertragungsstrukturen ist es insbesondere möglich, herkömmliche Rohre für die Heizrohre bzw. Kühlrohre zu verwenden, die sich insbesondere durch in der Rohrstapellängsrichtung konstante Querschnitte auszeichnen. Hierdurch lässt sich der Wärmetauscher besonders preiswert realisieren.

Entsprechend einer vorteilhaften Ausführungsform kann die Wärmeübertragungsfähigkeit einer in einem Heizrohr angeordneten Wärmeübertragungsstruktur in der Strömungsrichtung des Heizmittels zunehmen. Hierdurch kann eine Temperaturabnahme des Heizmittels in der Strömungsrichtung durch eine zunehmende Wärmeübertragungsfähigkeit kompensiert werden. Zusätzlich oder alternativ kann vorgesehen sein, dass die Wärmeübertragungsfähigkeit einer in einem Kühlrohr angeordneten Wärmeübertragungsstruktur in der Strömungsrichtung des Kühlmittels abnimmt. Die Temperatur des Kühlmittels nimmt in der Strömungsrichtung zu, was durch eine Reduzierung der Wärmeübertragungsfähigkeit kompensiert werden kann.

Bei einer anderen vorteilhaften Ausführungsform kann vorgesehen sein, dass die Wärmeübertragungsfähigkeit in der Längsrichtung des Rohrstapels kontinuierlich variiert wird. Hierdurch lässt sich eine besonders homogene Vergleichmäßigung des Wärmestroms entlang der Rohrstapellängsrichtung erzielen.

Alternativ ist auch eine Ausführungsform möglich, bei welcher die Wärmeübertragungsfähigkeit in der Längsrichtung des Rohrstapels diskontinuierlich, also insbesondere gestuft, variiert. Bei einer diskontinuierlichen Variation der Wärmeübertragungsfähigkeit kann bspw. berücksichtigt werden, dass ein einzelner thermoelektrischer Generator üblicherweise aus mehreren, in der Rohrstapellängsrichtung hintereinander angeordneten thermoelektrischen Elementen besteht, wobei innerhalb des jeweiligen thermoelektrischen Elements Wärme in Elektrizität gewandelt wird. So kann entlang eines derartigen thermoelektrischen Generators ebenfalls eine gestufte Temperaturabnahme im Heizmittel bzw. Temperaturzunahme im Kühlmittel beobachtet werden. Durch eine Berücksichtigung dieser gestuften Temperaturänderung durch eine entsprechend gestufte Variation der Wärmeübertragungsfähigkeit kann ebenfalls der energetische Wirkungsgrad des Wärmetauschers verbessert werden.

Eine Diskontinuität der Wärmeübertragungsfähigkeit in der Längsrichtung oder aber in der Querrichtung der Wärmeleistruktur kann beispielsweise dadurch realisiert werden, dass zum Herstellen der Wärmeübertragungsstruktur ein Blechverwendet wird, das als Tailored Blank ausgestaltet ist. Dabei ist das Blech in der Längsrichtung oder in der Querrichtung der Wärmeübertragungsstruktur aus wenigstens zwei verschiedenen Blechen zusammengebaut, die sich durch unterschiedliche Materialien, die verschiedene Wärmeübertragungskoeffizienten besitzen, voneinander unterscheiden.

Gemäß einer anderen vorteilhaften Ausführungsform kann wenigstens eine solche Wärmeübertragungsstruktur durch eine Rippenstruktur gebildet sein, die sich in der Längsrichtung des Rohrstapels erstreckende Rippen aufweist. Eine derartige Rippenstruktur zeichnet sich durch einen besonders geringen Durchströmungswiderstand aus, besitzt dennoch vergleichsweise große Oberflächen, die für die Wärmeübertragung zur Verfügung stehen. Zur Herstellung einer solchen Rippenstruktur kann beispielsweise ein als Tailored Blank ausgestaltetes Blech der vorstehend beschriebenen Art verwendet werden, um die gewünschte Variation der Wärmeübertragungsfähigkeit zu erzielen.

Zusätzlich oder alternativ können sich gemäß einer zweckmäßigen Weiterbildung Längsabschnitte der Rippenstruktur, die unterschiedliche Wärmeübertragungsfähigkeiten besitzen, durch unterschiedliche Rippenanzahl und/oder Rippenwandstärke und/oder Rippendichte und/oder Rippengeometrie voneinander unterscheiden. Ebenso kann ein solcher Längsabschnitt einschichtig realisiert sein, während ein weiterer Längsabschnitt zwei- oder mehrschichtig gestaltet sein kann.

Alternativ dazu ist es ebenso möglich, einen von der Rippenstruktur ausgefüllten Flächenanteil einer Innenquerschnittsfläche des jeweiligen Rohrs in der Längsrichtung der Rippenstruktur zu variieren. Die Rippenstruktur selbst kann im Übrigen in der Rohrstapellängsrichtung konstant bzw. gleichförmig konstruiert sein. Beispielsweise kann die Rippenstruktur in der Längsrichtung des Rohrstapels keilförmig zugeschnitten sein, so dass in der Rohrstapellängsrichtung bei an sich konstanter Rippendichte und Rippengeometrie die Anzahl der vorhandenen Rippen zunimmt oder - je nach Blickrichtung - abnimmt.

Bei einer anderen alternativen Ausführungsform kann vorgesehen sein, dass die Rippenstruktur zumindest zwei in der Längsrichtung des Rohrstapels benachbarte Segmente aufweist, die sich durch unterschiedliche Rippenanzahl und/oder Rippenwandstärke und/oder Rippendichte und/oder Rippengeometrie und/oder Schichtzahl voneinander unterscheiden. Anstelle einer durchgehenden, einstückigen Rippenstruktur, wird für diesen Fall somit eine segmentierte Rippenstruktur vorgeschlagen, die unterschiedlich gestaltete Segmente besitzt, wobei innerhalb des jeweiligen Segments die vorstehend genannten Parameter zweckmäßig konstant sind.

Bei einer weiteren Ausführungsform kann vorgesehen sein, dass sich die Rippenstruktur in der Rohrstapellängsrichtung durchgehend, also unterbrechungsfrei erstreckt und einen in der Längsrichtung des Rohrstapels konstanten Außenquerschnitt besitzt, wobei sich jedoch eine Rippenwandstärke und/oder eine Rippengeometrie in der Längsrichtung des Rohrstapels verändert. Dies kann bspw. dadurch realisiert werden, dass die Rippenstruktur aus einem Blech hergestellt wird, das in der Rohrstapellängsrichtung eine variierende Blechstärke besitzt. Alternativ dazu kann vorgesehen sein, dass in der Rohrlängsrichtung eine Anzahl aufeinanderliegender Bleche zur Ausbildung der Rippenstruktur zunimmt bzw. abnimmt. Beispielsweise kann die Rippenstruktur an einem Anströmende einlagig ausgestaltet sein, während sie an ihrem Abströmende zwei- oder mehrlagig ist, so dass die Wandstärke der Rippenstruktur, die über die Anzahl der verwendeten Bleche bestimmt ist, in der Strömungsrichtung des jeweiligen Mittels gestuft zunimmt.

Bei einer anderen vorteilhaften Ausführungsform kann wenigstens eine solche Wärmeübertragungsstruktur so ausgestaltet sein, dass ihre Wärmeübertragungsfähigkeit quer zur Längsrichtung des Rohrstapels und quer zur Stapelrichtung variiert. Zweckmäßig ist dabei eine zur Längsmittelachse des jeweiligen Rohrs symmetrische Variation der Wärmeübertragungsfähigkeit. Beispielsweise nimmt die Wärmeübertragungsfähigkeit zur Mitte hin kontinuierlich oder diskontinuierlich ab oder zu.

Vorstehende Ausgestaltung lässt sich gemäß einer bevorzugten Weiterbildung z.B. dadurch realisieren, dass eine Rippenwandstärke und/oder eine Rippengeometrie quer zur Längsrichtung des Rohrstapels und quer zur Stapelrichtung variiert. Dabei kann vorgesehen sein, dass sich die Rippenstruktur in der Rohrstapellängsrichtung durchgehend, also unterbrechungsfrei erstreckt und einen in der Längsrichtung des Rohrstapels konstanten Außenquerschnitt besitzt. Auch diese Ausgestaltung kann bspw. dadurch realisiert werden, dass die Rippenstruktur aus einem Blech hergestellt wird, das quer zur Rohrstapellängsrichtung eine variierende Blechstärke besitzt. Alternativ dazu kann vorgesehen sein, dass quer zur Rohrlängsrichtung eine Anzahl aufeinanderliegender Bleche zur Ausbildung der Rippenstruktur zunimmt bzw. abnimmt. Beispielsweise kann die Rippenstruktur an ihren beiden Seitenenden einlagig ausgestaltet sein, während sie mittig zwei- oder mehrlagig ist, so dass die Wandstärke der Rippenstruktur, die über die Anzahl der verwendeten Bleche bestimmt ist, in quer zur Strömungsrichtung des jeweiligen Mittels gestuft zu- und wieder abnimmt.

Bei einer anderen Ausführungsform kann der jeweilige thermoelektrische Generator mehrere separate thermoelektrische Elemente aufweisen, die elektrisch miteinander verschaltet sind und die in der Längsrichtung des Rohrstapels nebeneinander angeordnet sind. Ferner umfasst der Wärmetauscher zweckmäßig mehrere Heizrohre und mehrere Kühlrohre, die sich mit zwischenliegenden thermoelektrischen Generatoren in der Stapelrichtung abwechseln. Die Adaption der Wärmeübertragungsstrukturen kann somit abhängig von der Position des jeweiligen Rohrs innerhalb des Rohrstapels sowie abhängig von der Anzahl und Verteilung der thermoelektrischen Elemente innerhalb desselben Wärmetauschers variieren.

Eine erfindungsgemäße Brennkraftmaschine, die insbesondere in einem Kraftfahrzeug zur Anwendung kommt, umfasst einen Motorblock, der mehrere Brennräume aufweist, eine Abgasanlage zum Abführen von Verbrennungsabgas von den Brennräumen, einen Kühlkreis zum Kühlen des Motorblocks und zumindest einen Wärmetauscher der vorstehend beschriebenen Art. Dabei ist das wenigstens eine Heizrohr des Wärmetauschers fluidisch mit der Abgasanlage gekoppelt, während das wenigstens eine Kühlrohr des Wärmetauschers fluidisch mit dem Kühlkreis gekoppelt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine,
- Fig. 2: ein stark vereinfachter, schematischer Querschnitt eines Wärmetauschers,
- Fig. 3: eine vereinfachte Seitenansicht des Wärmetauschers,
- Fig. 4 bis 6: jeweils einen Längsschnitt durch ein Rohr des Wärmetauschers in einer Draufsicht bei verschiedenen Ausführungsformen, wobei die Ausführungsform gemäß Fig. 4 nicht Teil der Erfindung ist.
- Fig. 7: eine stark vereinfachte isometrische Ansicht eines Blechs zur Herstellung einer Wärmeübertragungsstruktur gemäß Fig. 8,
- Fig. 8: eine vereinfachte isometrische Ansicht eines Ausschnitts einer weiteren Wärmeübertragungsstruktur,
- Fig. 9: eine Ansicht wie in Fig. 7, jedoch bei einem anderen Blech zur Herstellung einer Wärmeübertragungsstruktur gemäß Fig. 10,
- Fig. 10: eine Ansicht wie in Fig. 8, jedoch bei einer anderen Wärmeübertragungsstruktur.

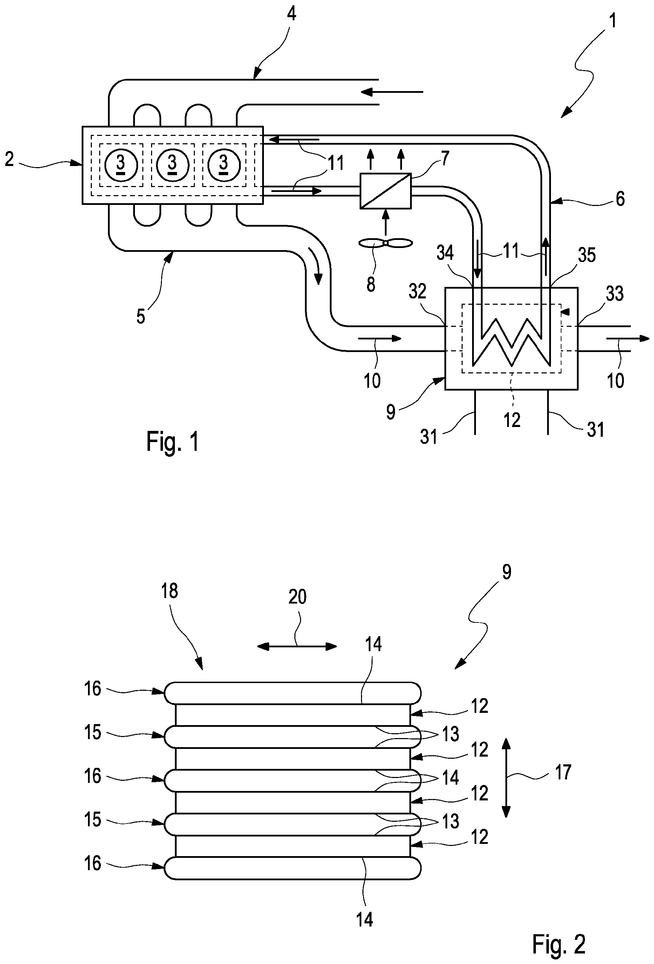

Entsprechend Fig. 1 umfasst eine Brennkraftmaschine 1, die insbesondere in einem Kraftfahrzeug angeordnet sein kann, einen Motorblock 2, der mehrere Brennräume 3 enthält, in denen bei Verbrennungsreaktionen Abgas entsteht. Eine Frischluftanlage 4 versorgt die Brennräume 3 mit Frischluft. Eine Abgasanlage 5 führt das Abgas 10 von den Brennräumen 3 ab. Die Brennkraftmaschine 1 ist ferner mit einem Kühlkreis 6 ausgestattet, in dem ein Kühlmittel 11 zirkuliert und mit dessen Hilfe der Motorblock 2 gekühlt werden kann. In üblicher Weise ist dabei in den Kühlkreis 6 ein Motorkühler 7 eingebunden, der bspw. aktiv mit Hilfe eines Gebläses 8 von Umgebungsluft durchströmt werden kann. Die hier vorgestellte Brennkraftmaschine 1 ist außerdem mit einem Wärmetauscher 9 ausgestattet, der einerseits fluidisch in die Abgasanlage 5 und andererseits fluidisch in den Kühlkreis 6 eingebunden ist, derart, dass eine Wärmeübertragung zwischen dem als Heizmittel 10 dienenden Abgas der Abgasanlage 5 und dem Kühlmittel 11 des Kühlkreises 6 realisierbar ist.

Gemäß Fig. 1 besitzt der Wärmetauscher 9 einen Heizmitteleinlass 32, einen Heizmittelauslass 33, einen Kühlmitteleinlass 34 und einen Kühlmittelauslass 35. Die Strömungsrichtung des Heizmittels 10 führt vom Heizmitteleinlass 32 zum Heizmittelauslass 33. Die Strömungsrichtung des Kühlmittels 11 führt vom Kühlmitteleinlass 34 zum Kühlmittelauslass 35.

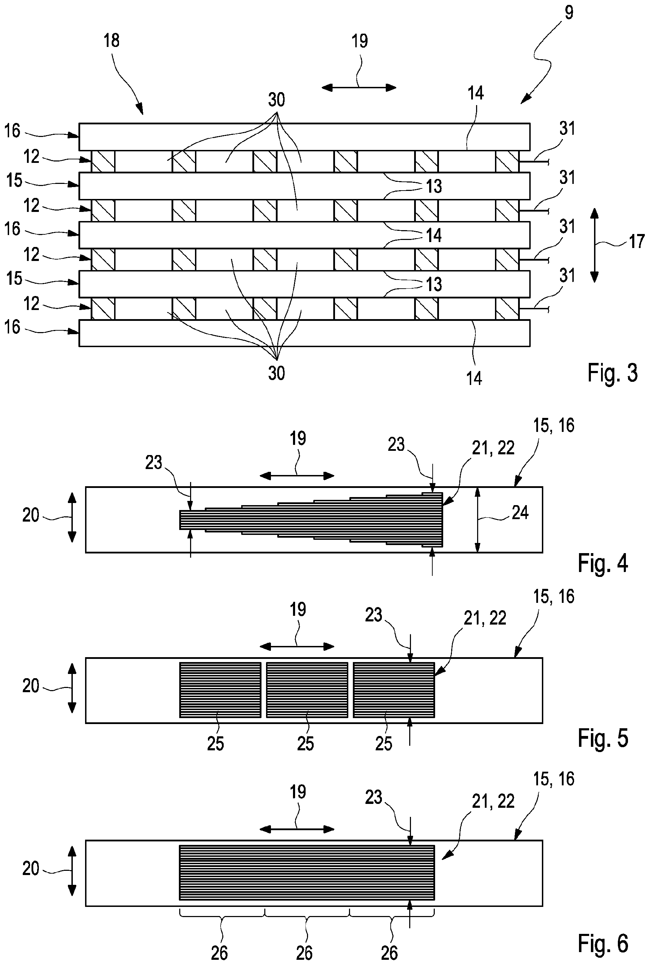

Ein derartiger Wärmetauscher 9 umfasst gemäß den Fig. 2 und 3 zumindest einen thermoelektrischen Generator 12. In der in den Fig. 2 und 3 gezeigten Ausführungsform besitzt der Wärmetauscher 9 rein exemplarisch vier derartige thermoelektrische Generatoren 12. Der jeweilige thermoelektrische Generator 12 besitzt dabei jeweils eine Heißseite 13 und eine Kaltseite 14. Desweiteren umfasst der Wärmetauscher 9 zumindest ein Heizrohr 15. Im gezeigten Beispiel sind zwei derartige Heizrohre 15 vorgesehen. Das jeweilige Heizrohr 15 dient zum Führen des Heizmittels 10 und ist jeweils an zumindest einer Heißseite 13 eines solchen thermoelektrischen Generators 12 angeordnet. Im gezeigten Beispiel ist jedes Heizrohr 15 an zwei einander zugewandten Heißseiten 13 von zwei benachbarten thermoelektrischen Generatoren 12 angeordnet. Schließlich umfasst der Wärmetauscher 9 noch wenigstens ein Kühlrohr 16. Im gezeigten Beispiel sind drei derartige Kühlrohre 16 vorgesehen, nämlich zwei äußere Kühlrohre 16 und ein mittleres Kühlrohr 16. Das jeweilige Kühlrohr 16 dient zum Führen des Kühlmittels 11 und ist dabei an wenigstens einer Kaltseite 14 wenigstens eines solchen thermoelektrischen Generators 12 angeordnet. Im Beispiel sind die beiden äußeren Kühlrohre 16 jeweils einer Kaltseite 14 eines thermoelektrischen Generators 12 angeordnet. Im Unterschied dazu ist das mittlere Kühlrohr 16 an zwei einander gegenüberliegenden Kaltseiten 14 von zwei benachbarten thermoelektrischen Generatoren 12 angeordnet.

Entsprechend Fig. 3 ist der jeweilige thermoelektrische Generator 12 in üblicher Weise aus mehreren separaten thermoelektrischen Elementen 30 zusammengebaut, die in der Längsrichtung 19 hintereinander angeordnet sind und die auf geeignete Weise elektrisch miteinander verbunden sind. Entsprechende elektrische Anschlüsse 31 sind aus dem Wärmetauscher 9 herausgeführt, wodurch der aus der Wärme des Abgases 10 gewonnene elektrische Strom abgeführt werden kann.

Die thermoelektrischen Generatoren 12, die Heizrohre 15 und die Kühlrohre 16 sind in einer Stapelrichtung 17 aufeinander gestapelt und bilden so einen Rohrstapel 18. Innerhalb des Rohrstapels 18 erstrecken sich die thermoelektrischen Generatoren 12, die Heizrohre 15 und die Kühlrohre 16 parallel zueinander und definieren dadurch eine Längsrichtung 19 des Rohrstapels 18. In Fig. 2 ist außerdem eine Querrichtung 20 des Rohrstapels 18 angedeutet, die sich quer zur Stapelrichtung 17 und quer zur Längsrichtung 19 erstreckt.

Gemäß den Fig. 4 bis 6 kann im Inneren wenigstens eines der Rohre, also der Heizrohre 15 und Kühlrohre 16 eine Wärmeübertragungsstruktur 21 angeordnet sein. Eine derartige Wärmeübertragungsstruktur 21 besitzt eine Wärmeübertragungsfähigkeit, die einen Wärmeübergang zwischen dem jeweiligen Rohr 15, 16 und dem jeweiligen darin geführten Mittel 10, 11 begünstigt. Die Wärmeübertragungsstruktur 21 ist dabei so ausgestaltet, dass ihre Wärmeübertragungsfähigkeit in der Längsrichtung 19 variiert. Beispielsweise kann vorgesehen sein, dass die Wärmeübertragungsfähigkeit der Wärmeübertragungsstruktur 21 bei einem Heizrohr 15 in der Strömungsrichtung des Heizmittels 10 zunimmt. Im Unterschied dazu kann die Wärmeübertragungsfähigkeit der Wärmeübertragungsstruktur 21 in einem Kühlrohr 16 in der Strömungsrichtung des Kühlmittels 11 abnehmen.

Bei der in Fig. 4 gezeigten Ausführungsform variiert die Wärmeübertragungsfähigkeit in der Längsrichtung 19 kontinuierlich, insbesondere linear. Im Unterschied dazu zeigt Fig. 5 eine Ausführungsform, bei welcher die Wärmeübertragungsfähigkeit in der Längsrichtung 19 diskontinuierlich, insbesondere gestuft, variiert.

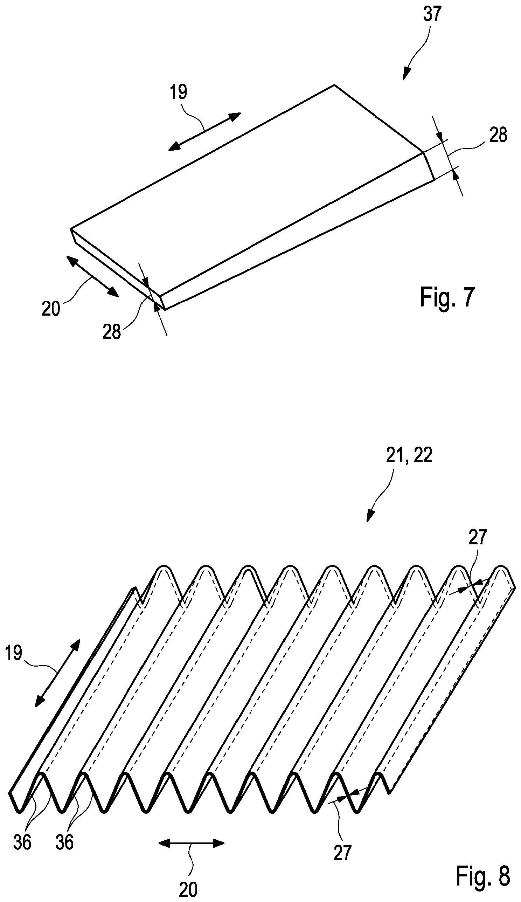

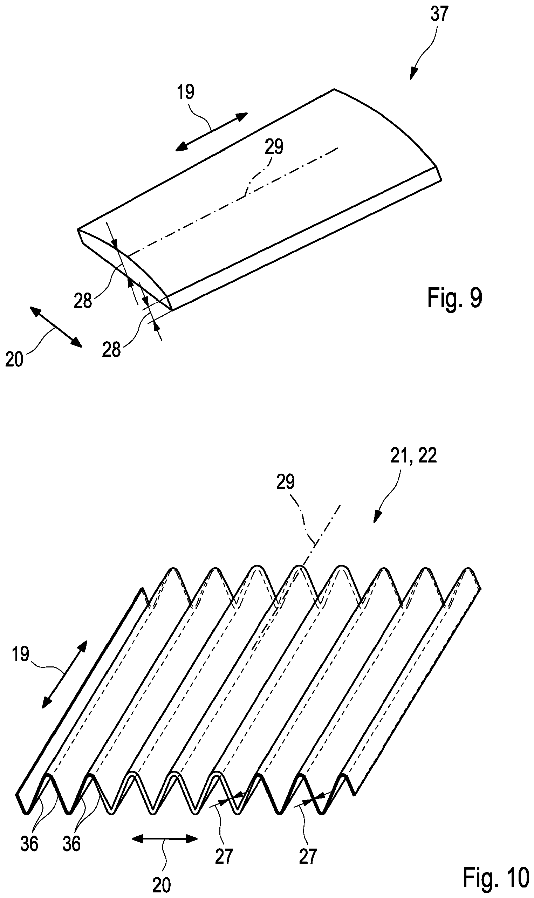

Wie sich insbesondere den Fig. 8 und 10 entnehmen lässt, kann die Wärmeübertragungsstruktur 21 vorteilhaft mit Hilfe einer Rippenstruktur 22 realisiert sein, die sich durch Rippen 36 charakterisiert, die sich in der Längsrichtung 19 erstrecken.

Bei der in Fig. 4 gezeigten Ausführungsform kann ein von der Rippenstruktur 21 ausgefüllter Flächenanteil 23 einer Innenquerschnittsfläche 24 des jeweiligen Rohrs 15, 16 in der Längsrichtung 19 variieren. Die Rippenstruktur 21 bleibt dabei in sich konstant. Die Varianz des Flächenanteils 23 wird in diesem Fall durch einen entsprechenden, hier keilförmigen, Zuschnitt der Wärmeübertragungsstruktur 21 bzw. der Rippenstruktur 22 erreicht. Im Beispiel der Fig. 4 ist die Rippenstruktur 22 im Wesentlichen trapezförmig konfiguriert.

Bei der in Fig. 5 gezeigten Ausführungsform wird die Varianz der Wärmeübertragungsfähigkeit durch eine Segmentierung der Rippenstruktur 22 erreicht. Rein exemplarisch sind drei Segmente 25 wiedergegeben, die sich durch unterschiedliche Wärmeübertragungsfähigkeiten unterscheiden. Erreicht wird dies insbesondere dadurch, dass sich benachbarte Segmente 25 durch unterschiedliche Rippenanzahl und/oder unterschiedliche Rippenwandstärke und/oder unterschiedliche Rippendichte und/oder unterschiedliche Rippengeometrie und/oder unterschiedliche Blechlagenzahlen voneinander unterscheiden.

Bei der in Fig. 6 gezeigten Ausführungsform erstreckt sich die Rippenstruktur 22 in der Längsrichtung 19 durchgehend bzw. unterbrechungsfrei und besitzt außerdem in der Längsrichtung einen konstant bleibenden Flächenanteil 23, so dass sich auch ein in der Längsrichtung 19 konstanter Außenquerschnitt ergibt. Dennoch kann die Rippenstruktur 22 in der Längsrichtung 19 mehrere Längsabschnitte 26 aufweisen, die sich durch unterschiedliche Wärmeübertragungsfähigkeiten voneinander unterscheiden. Beispielsweise kann die Rippenstruktur 22 mithilfe von so genannten Tailored Blanks, also Blechen, die aus verschiedenen Blechen unterschiedlicher Materialien zusammengesetzt sind, die sich durch unterschiedliche Wärmeübertragungskoeffizienten voneinander unterscheiden. Auf diese Weise lassen sich innerhalb der Rippenstruktur 22 unterschiedliche Wärmeübertragungsfähigkeiten realisieren.

Bei den in Fig. 5 gezeigten einzelnen Segmenten 25 ist dabei der Flächenanteil 23 und somit der Außenquerschnitt der Rippenstruktur 22 gleichbleibend.

Fig. 8 zeigt eine weitere Ausführungsform, bei der die Rippenstruktur 22 bzw. die Wärmeübertragungsstruktur 21 in der Längsrichtung 19 unterbrechungsfrei bzw. durchgehend gestaltet ist. Eine variierende Wärmeübertragungsfähigkeit in der Längsrichtung 19 wird hierbei durch eine in der Längsrichtung 19 variierende Rippenwandstärke 27 realisiert. So ist in Fig. 8 an einem dem Betrachter zugewandten Ende die Wandstärke 27 kleiner als an einem vom Betrachter abgewandten Ende der Rippenstruktur 22. Erreicht wird dies durch die Verwendung eines in Fig. 7 gezeigten Blechs 37, bei dem in der Längsrichtung 19 eine Blechstärke oder Blechdicke 28 variiert. Im Beispiel der Fig. 7 ist die Blechstärke 28 an einem in Fig. 7 links gezeigten Längsende deutlich kleiner als an einem in Fig. 7 rechts gezeigten Längsende des Blechs 37. Erreicht werden kann dies bspw. durch eine Herstellung der Rippenstruktur 22 mit Hilfe von so genannten Tailored Blanks, also Blechen 37, die aus verschiedenen Blechen mit variierender Blechstärke zusammengesetzt sind. Auf diese Weise lassen sich innerhalb der Rippenstruktur 22 unterschiedliche Rippenwandstärken 27 realisieren. Die Verwendung von Tailored Blanks ermöglicht außerdem die Verwendung unterschiedlicher Materialien, die sich insbesondere durch unterschiedliche Wärmeübertragungskoeffizienten voneinander unterscheiden können.

Fig. 10 zeigt eine weitere Ausführungsform, die als Option zusätzlich zu den vorstehend genannten Ausführungsformen zur Anwendung kommen kann, bei welcher die Wärmeübertragungsstruktur 21 bzw. hier die Rippenstruktur 22 so konfiguriert ist, dass die Wärmeübertragungsfähigkeit in der Querrichtung 20 variiert. Beispielsweise kann vorgesehen sein, dass die Rippenwandstärke 27 entlang der Rippenstruktur 22 in der Querrichtung 20 variiert. Im Beispiel der Fig. 10 nimmt die Rippenwandstärke 27 von den außenliegenden Randseiten in Richtung zur Mitte zu. Eine Längsmittelachse 29 der Rippenstruktur 22 definiert dabei deren Mitte. Erreicht wird dies durch die Verwendung eines in Fig. 9 gezeigten Blechs 37, dessen Blechstärke 28 ausgehend von der Längsmittelachse 29 nach außen abnimmt. Zweckmäßig sind das Blech 37 und die Wärmeübertragungsstruktur 21 spiegelsymmetrisch zur Längsmittelachse 29 aufgebaut, so dass im Beispiel der Fig. 9 die Blechdicke 28 von den beiden außenliegenden Randseiten her zur Mitte hin zunimmt. Analog dazu nimmt die Rippenwandstärke 27 bei der Wärmeübertragungsstruktur der Fig. 10 ausgehend von den seitlichen, äußeren Randbereichen hin zur Längsmittellinie 29 zu. Erreicht werden kann dies bspw. durch eine Herstellung der Rippenstruktur 22 mit Hilfe von so genannten Tailored Blanks, also Blechen 37, die aus verschiedenen Blechen mit variierender Blechstärke zusammengesetzt sind. Auf diese Weise lassen sich innerhalb der Rippenstruktur 22 unterschiedliche Rippenwandstärken 27 realisieren. Die Verwendung von Tailored Blanks ermöglicht außerdem die Verwendung unterschiedlicher Materialien, die sich insbesondere durch unterschiedliche Wärmeübertragungskoeffizienten voneinander unterscheiden können.

## Patentansprüche

1. Wärmetauscher, insbesondere für eine Abgasanlage (5) einer Brennkraftmaschine (1), vorzugsweise in einem Kraftfahrzeug,
- mit mindestens einem thermoelektrischen Generator (12), der eine Heißseite (13) und eine Kaltseite (14) aufweist,
- mit mindestens einem Heizrohr (15) zum Führen eines Heizmittels (10), das an wenigstens einer Heißseite (13) eines solchen thermoelektrischen Generators (12) angeordnet ist,
- mit mindestens einem Kühlrohr (16) zum Führen eines Kühlmittels (11), das an wenigstens einer Kaltseite (14) eines solchen thermoelektrischen Generators (12) angeordnet ist,
- wobei der wenigstens eine thermoelektrische Generator (12) das wenigstens eine Heizrohr (15) und das wenigstens eine Kühlrohr (16) in einer Stapelrichtung (17) aufeinander gestapelt sind und einen Rohrstapel (18) bilden, in dem sich der jeweilige thermoelektrische Generator (12), das jeweilige Heizrohr (15) und das jeweilige Kaltrohr (16) parallel zueinander in einer Längsrichtung (19) des Rohrstapels (18) erstrecken,
- wobei in wenigstens einem der Rohre (15, 16) eine Wärmeübertragungsstruktur (21) angeordnet ist, die eine Wärmeübertragungsfähigkeit aufweist, die einen Wärmeübergang zwischen dem jeweiligen Rohr (15, 16) und dem jeweiligen darin geführten Mittel (10, 11) begünstigt, und
- wobei zumindest eine solche Wärmeübertragungsstruktur (21) so ausgestaltet ist, dass ihre Wärmeübertragungsfähigkeit in der Längsrichtung (19) des Rohrstapels (18) variiert,
**dadurch gekennzeichnet,**
- **dass** die Wärmeübertragungsstruktur (21) als Rippenstruktur in Form einer gewellten und/oder wellblechartigen Wand ausgebildet ist, und
- **dass** die Variation der Wärmeübertragungsfähigkeit durch Veränderung der Wellenlänge und/oder Wellenamplitude von Wellen der Wand erfolgt.

2. Wärmetauscher nach Anspruch 1,
**dadurch gekennzeichnet,**
**dass** die Wärmeübertragungsstruktur (21) mit Hilfe eines als Tailored Blank ausgestalteten Blechs (37) gebildet ist, das aus wenigstens zwei Blechen zusammengebaut ist, die sich durch verschiedene Wärmeübertragungskoeffizienten voneinander unterscheiden.

3. Wärmetauscher nach Anspruch 1 oder 2,
**dadurch gekennzeichnet,**
**dass** die Rippenstruktur (22) sich in der Längsrichtung (19) des Rohrstapels (18) erstreckende Rippen (23) aufweist, wobei sich Längsabschnitte (26) der Rippenstruktur (22) mit unterschiedlicher Wärmeübertragungsfähigkeit durch unterschiedliche Rippenanzahl und/oder Rippenwandstärke (27) und/oder Rippendichte und/oder Rippengeometrie und/oder Blechanzahl voneinander unterscheiden.

4. Wärmetauscher nach einem der Ansprüche 1 bis 3,
**dadurch gekennzeichnet,**
**dass** wenigstens eine solche Wärmeübertragungsstruktur (21) durch eine Rippenstruktur (22) mit sich in der Längsrichtung (19) des Rohrstapels (18) erstreckenden Rippen (23) gebildet ist, wobei ein von der Rippenstruktur (22) ausgefüllter Flächenanteil (23) einer Innenquerschnittsfläche (24) des jeweiligen Rohrs (15, 16) in der Längsrichtung (19) des Rohrstapels (18) variiert.

5. Wärmetauscher nach einem der Ansprüche 1 bis 4,
**dadurch gekennzeichnet,**
**dass** wenigstens eine solche Wärmeübertragungsstruktur (21) durch eine Rippenstruktur (22) mit sich in der Längsrichtung (19) des Rohrstapels (18) erstreckenden Rippen (23) gebildet ist, wobei die Rippenstruktur (22) zumindest zwei in der Längsrichtung (19) des Rohrstapels (18) benachbarte Segmente (25) aufweist, die sich durch unterschiedliche Rippenanzahl und/oder Rippenwandstärke (27) und/oder Rippendichte und/oder Rippengeometrie und/oder Blechanzahl voneinander unterscheiden.

6. Wärmetauscher nach einem der Ansprüche 1 bis 5,
**dadurch gekennzeichnet,**
**dass** wenigstens eine solche Wärmeübertragungsstruktur (21) so ausgestaltet ist, dass ihre Wärmeübertragungsfähigkeit quer zur Längsrichtung (19) des Rohrstapels (18) und quer zur Stapelrichtung (17) variiert.

7. Wärmetauscher nach einem der Ansprüche 1 bis 6,
**dadurch gekennzeichnet,**
**dass** wenigstens eine solche Wärmeübertragungsstruktur (21) durch eine Rippenstruktur (22) mit sich in der Längsrichtung (19) des Rohrstapels (18) erstreckenden Rippen (23) gebildet ist, wobei sich die Rippenstruktur (22) in der Längsrichtung (19) des Rohrstapels (18) durchgehend erstreckt und einen in der Längsrichtung (19) des Rohrstapels (18) konstanten Außenquerschnitt besitzt, wobei sich eine Rippenwandstärke (27) und/oder eine Rippengeometrie quer zur Längsrichtung (19) des Rohrstapels (18) und quer zur Stapelrichtung (17) verändert.

8. Wärmetauscher nach einem der Ansprüche 1 bis 7,
**dadurch gekennzeichnet,**
**dass** der jeweilige thermoelektrische Generator (12) mehrere separate thermoelektrische Elemente (30) aufweist, die elektrisch miteinander verschaltet sind und die in der Längsrichtung (19) des Rohrstapels (18) nebeneinander angeordnet sind.

9. Brennkraftmaschine, insbesondere eines Kraftfahrzeugs,
- mit einem Motorblock (2), der mehrere Brennräume (3) aufweist,
- mit einer Abgasanlage (5) zum Abführen von Verbrennungsabgas (10) von den Brennräumen (3),
- mit einem Kühlkreis (6) zum Kühlen des Motorblocks (2),
- mit einem Wärmetauscher (9) nach einem der vorhergehenden Ansprüche, dessen wenigstens eines Heizrohr (15) fluidisch mit der Abgasanlage (5) gekoppelt ist und dessen wenigsten eines Kühlrohr (16) fluidisch mit dem Kühlkreis (6) gekoppelt ist.

## Claims

1. A heat exchanger, in particular for an exhaust system (5) of an internal combustion engine (1), preferentially in a motor vehicle,
- with at least one thermoelectric generator (12) having a hot side (13) and a cold side (14),
- with at least one heating pipe (15) for conducting a heating medium (10), which is arranged on at least one hot side (13) of such a thermoelectric generator (12),
- with at least one cooling pipe (16) for conducting a cooling medium (11), which is arranged on at least one cold side (14) of such a thermoelectric generator (12),
- wherein the at least one thermoelectric generator (12), the at least one heating pipe (15) and the at least one cooling pipe (16) are stacked on top of one another in a stack direction (17) and form a pipe stack (18), in which the respective thermoelectric generator (12), the respective heating pipe (15) and the respective cold pipe (16) extend parallel to one another in a longitudinal direction (19) of the pipe stack (18),
- wherein in at least one of the pipes (15, 16) a heat transfer structure (21) is arranged, which has a heat transfer capability which favours a heat transfer between the respective pipe (15, 16) and the respective medium (10, 11) conducted therein, and
- wherein at least one such heat transfer structure (21) is configured so that its heat transfer capability varies in the longitudinal direction (19) of the pipe stack (18),
**characterized in**
- **that** the heat transfer structure (21) is formed as a rib structure in the form of a wavy and/or corrugated sheet-like wall, and
- **that** the variation of the heat transfer capability is effected by changing the wave length and/or wave amplitude of waves of the wall.

2. The heat exchanger according to Claim 1,
**characterized in**
**that** the heat transfer structure (21) is formed with the help of a metal sheet (37) configured as a tailored blank, which is assembled from at least two metal sheets which differ from one another through different heat transfer coefficients.

3. The heat exchanger according to Claim 1 or 2,
**characterized in**
**that** the rib structure (22) comprises ribs (23) extending in the longitudinal direction (19) of the pipe stack (18), wherein longitudinal portions (26) of the rib structure (22) with different heat transfer capability differ from one another through different rib quantity and/or rib wall thickness (27) and/or rib density and/or rib geometry and/or metal sheet quantity.

4. The heat exchanger according to any one of the Claims 1 to 3,
**characterized in**
**that** at least one such heat transfer structure (21) is formed through a rib structure (22) with ribs (23) extending in the longitudinal direction (19) of the pipe stack (18), wherein an area component (23) of an inner cross-sectional area (24) of the respective pipe (15, 16) filled out by the rib structure (22) varies in the longitudinal direction (19) of the pipe stack (18).

5. The heat exchanger according to any one of the Claims 1 to 4,
**characterized in**
**that** at least one such heat transfer structure (21) is formed through a rib structure (22) with ribs (23) extending in the longitudinal direction (19) of the pipe stack (18), wherein the rib structure (22) comprises at least two segments (25) which are adjacent in the longitudinal direction (19) of the pipe stack (18), which differ from one another through different rib quantity and/or rib wall thickness (27) and/or rib density and/or rib geometry and/or metal sheet quantity.

6. The heat exchanger according to any one of the Claims 1 to 5,
**characterized in**
**that** at least one such heat transfer structure (21) is configured so that its heat transfer capability varies transversely to the longitudinal direction (19) of the pipe stack (18) and transversely to the stack direction (17).

7. The heat exchanger according to any one of the Claims 1 to 6,
**characterized in**
**that** at least one such heat transfer structure (21) is formed through a rib structure (22) with ribs (23) extending in the longitudinal direction (19) of the pipe stack (18), wherein the rib structure (22) continuously extends in the longitudinal direction (19) of the pipe stack (18) and has a constant outer cross section in the longitudinal direction (19) of the pipe stack (18), wherein a rib wall thickness (27) and/or a rib geometry changes transversely to the longitudinal direction (19) of the pipe stack (18) and transversely to the stack direction (17).

8. The heat exchanger according to any one of the Claims 1 to 7,
**characterized in**
**that** the respective thermoelectric generator (12) comprises a plurality of separate thermoelectric elements (30) which are electrically interconnected and which are arranged in the longitudinal direction (19) of the pipe stack (18) next to one another.

9. An internal combustion engine, in particular of a motor vehicle,
- with an engine block (2), which comprises a plurality of combustion chambers (3),
- with an exhaust system (5) for discharging combustion exhaust gas (10) from the combustion chambers (3),
- with a cooling circuit (6) for cooling the engine block (2),
- with a heat exchanger (9) according to any one of the preceding Claims, whose at least one heating pipe (15) is fluidically coupled to the exhaust system (5) and whose at least one cooling pipe (16) is fluidically coupled to the cooling circuit (6).

## Revendications

1. Echangeur de chaleur en particulier pour une installation d'échappement (5) d'un moteur à combustion interne (1), de préférence dans un véhicule automobile,
- avec au moins un générateur thermoélectrique (12) qui présente un côté chaud (13) et un côté froid (14),
- avec au moins un tube de chauffage (15) pour le guidage d'un moyen de chauffage (10) qui est agencé au niveau d'au moins un côté chaud (13) d'un tel générateur thermoélectrique (12),
- avec au moins un tube de refroidissement (16) pour le guidage d'un moyen de refroidissement (11) qui est agencé au niveau d'au moins un côté froid (14) d'un tel générateur thermoélectrique (12),
- dans lequel l'au moins un générateur thermoélectrique (12), l'au moins un tube de chauffage (15) et l'au moins un tube de refroidissement (16) sont empilés les uns sur les autres dans un sens d'empilement (17) et forment une pile de tubes (18), dans laquelle le générateur thermoélectrique (12) respectif, le tube de chauffage (15) respectif et le tube froid (16) respectif s'étendent parallèlement les uns aux autres dans un sens longitudinal (19) de la pile de tubes (18),
- dans lequel dans au moins un des tubes (15, 16) une structure de transmission de chaleur (21) est agencée, laquelle présente une capacité de transmission de chaleur qui favorise une transition thermique entre le tube (15, 16) respectif et le moyen (10, 11) respectif guidé dedans, et
- dans lequel au moins une telle structure de transmission de chaleur (21) est configurée de sorte que sa capacité de transmission de chaleur varie dans le sens longitudinal (19) de la pile de tubes (18),
**caractérisé en ce**
- **que** la structure de transmission de chaleur (21) est réalisée comme structure nervurée sous la forme d'une paroi ondulée et/ou de type tôle ondulée, et
- **que** la variation de la capacité de transmission de chaleur est effectuée par modification de la longueur d'onde et/ou de l'amplitude d'onde d'ondes de la paroi.

2. Echangeur de chaleur selon la revendication 1,
**caractérisé en ce**
**que** la structure de transmission de chaleur (21) est formée à l'aide d'une tôle (37) configurée comme tailored blank qui est constituée d'au moins deux tôles qui se distinguent l'une de l'autre par différents coefficients de transmission de chaleur.

3. Echangeur de chaleur selon la revendication 1 ou 2,
**caractérisé en ce**
**que** la structure nervurée (22) présente des nervures (23) s'étendant dans le sens longitudinal (19) de la pile de tubes (18), dans lequel des sections longitudinales (26) de la structure nervurée (22) avec une capacité de transmission de chaleur différente se distinguent les unes des autres par un différent nombre de nervures et/ou épaisseur de paroi de nervure (27) et/ou densité de nervure et/ou géométrie de nervure et/ou nombre de tôles.

4. Echangeur de chaleur selon l'une quelconque des revendications 1 à 3,
**caractérisé en ce**
**qu'**au moins une telle structure de transmission de chaleur (21) est formée par une structure nervurée (22) avec des nervures (23) s'étendant dans le sens longitudinal (19) de la pile de tubes (18), dans lequel une part de surface (23) remplie par la structure nervurée (22) d'une superficie de section transversale intérieure (24) du tube (15, 16) respectif varie dans le sens longitudinal (19) de la pile de tubes (18).

5. Echangeur de chaleur selon l'une quelconque des revendications 1 à 4,
**caractérisé en ce**
**qu'**au moins une telle structure de transmission de chaleur (21) est formée par une structure nervurée (22) avec des nervures (23) s'étendant dans le sens longitudinal (19) de la pile de tubes (18), dans lequel la structure nervurée (22) présente au moins deux segments (25) contigus dans le sens longitudinal (19) de la pile de tubes (18) qui se distinguent l'un de l'autre par un différent nombre de nervures et/ou épaisseur de paroi de nervure (27) et/ou densité de nervure et/ou géométrie de nervure et/ou nombre de tôles.

6. Echangeur de chaleur selon l'une quelconque des revendications 1 à 5,
**caractérisé en ce**
**qu'**au moins une telle structure de transmission de chaleur (21) est configurée de sorte que sa capacité de transmission de chaleur varie transversalement au sens longitudinal (19) de la pile de tubes (18) et transversalement au sens d'empilement (17).

7. Echangeur de chaleur selon l'une quelconque des revendications 1 à 6,
**caractérisé en ce**
**qu'**au moins une telle structure de transmission de chaleur (21) est formée par une structure nervurée (22) avec des nervures (23) s'étendant dans le sens longitudinal (19) de la pile de tubes (18), dans lequel la structure nervurée (22) s'étend en continu dans le sens longitudinal (19) de la pile de tubes (18) et possède une section transversale extérieure constante dans le sens longitudinal (19) de la pile de tubes (18), dans lequel une épaisseur de paroi de nervure (27) et/ou une géométrie de nervure se modifie transversalement au sens longitudinal (19) de la pile de tubes (18) et transversalement au sens d'empilement (17).

8. Echangeur de chaleur selon l'une quelconque des revendications 1 à 7,
**caractérisé en ce**
**que** le générateur thermoélectrique (12) respectif présente plusieurs éléments (30) thermoélectriques séparés qui sont câblés entre eux électriquement et qui sont agencés dans le sens longitudinal (19) de la pile de tubes (18) les uns à côté des autres.

9. Moteur à combustion interne, en particulier d'un véhicule automobile,
- avec un bloc moteur (2) qui présente plusieurs espaces de combustion (3),
- avec une installation d'échappement (5) pour l'évacuation de gaz de combustion (10) des espaces de combustion (3),
- avec un circuit de refroidissement (6) pour le refroidissement du bloc moteur (2),
- avec un échangeur de chaleur (9) selon l'une quelconque des revendications précédentes, dont au moins un tube de chauffage (15) est couplé de manière fluidique à l'installation d'échappement (5) et dont au moins un tube de refroidissement (16) est couplé de manière fluidique au circuit de refroidissement (6).
